# FASCICULE DE BREVET EUROPEEN

(11) **EP 1 719 653 B1**
(45) Date de publication et mention de la délivrance du brevet: **13.01.2010**
(21) Numéro de dépôt: 06350006.0
(22) Date de dépôt: 15.03.2006
(51) Int. Cl.: B60J 7/02

(54) **Véhicule du type cabriolet à toit rigide avec cloison fixe**
Fahrzeug vom Typ Cabriolet mit Hard-Top und fester Trennungswand
Cabriolet type of vehicle with rigid roof and fixed dividing wall

(30) Priorité: 04.05.2005 FR 0504531
(43) Date de publication de la demande: 08.11.2006
(73) Titulaire: Heuliez, 79140 Cerizay (FR)
(72) Inventeur: Quéveau, Gérard, 79140 Le Pin (FR); Quéveau, Paul, 79140 Montravers (FR); Guillez, Jean Marc, 79140 Cirières (FR)
(74) Mandataire: Tournel, Jean Louis

(56) Documents cités:
- EP-A- 0 570 601
- DE-A1- 4 326 292
- DE-A1- 19 926 474
- FR-A- 2 814 402
- US-B1- 6 382 703

## Description

L'invention se rapporte à un véhicule du type coupé convertible à toit rigide rétractable.

Les véhicules cabriolets sont très prisés. Il existe différents types de toits sur ces véhicules. Les toits souples ont l'avantage de pouvoir se replier dans un faible encombrement.

Les toits rigides sont plus encombrants mais offrent plus de résistance dans le temps.

On connaît de nombreux toits mobiles constitués d'éléments rigides permettant de transformer un véhicule du type coupé en un véhicule du type cabriolet.

Un but de la présente invention est de proposer un véhicule à toit rigide rétractable qui soit à la fois simple et de structure ayant une bonne résistance et pouvant accueillir deux rangées de sièges dans un habitacle assez vaste.

Dans ces conditions, une solution proposée consiste dans un véhicule de type coupé convertible comme divulgué dans le document FR 2814402, comprenant un élément de toit avant rigide, des éléments latéraux de toit arrière rigides définissant un premier élément de toit arrière, ces éléments latéraux étant situés de part et d'autre d'un deuxième élément de toit arrière central rigide, ceci au moins dans un état déployé de tous ces éléments de toit, l'élément avant de toit étant articulé au premier élément arrière de toit suivant un premier axe transversal et ce premier élément arrière de toit étant articulé à la caisse du véhicule suivant un deuxième axe transversal avec les éléments latéraux, lesquels éléments sont mobiles entre ledit état déployé dans lequel ils s'étendent au-dessus de l'habitacle du véhicule et un état plié dans lequel ces éléments de toit sont disposés dans un coffre arrière du véhicule, où, suivant l'invention, l'espace situé derrière les sièges au niveau de la tête des occupants du véhicule est fermé par une cloison fixe, solidaire de la caisse du véhicule, la cloison s'étendant entre la caisse et l'arrière du toit rigide.

D'autres particularités et avantages de l'invention pourront encore apparaître dans la description ci-après ou les dessins annexés, donnés à titre d'exemples non limitatifs, sont tels que:
- la figure 1 est une coupe du toit, dans son état fermé au-dessus de l'habitacle et dans son état plié, à droite
- la figure 2 montre une variante de véhicule avec son toit mobile simplifié
- la figure 3 montre en perspective la structure de la cloison équipant le véhicule
- la figure 4A montre partiellement une cloison montée vue en coupe verticale selon IV-IV
- la figure 4B montre partiellement une cloison montée vue en coupe verticale selon IV-IV sur un véhicule type TARGA
- La figure 5A montre partiellement une coupe horizontale selon V-V et transverse de la cloison montée sur un véhicule comportant des custodes.
- La figure 5B montre partiellement une coupe horizontale selon V-V et transverse de la cloison montée sur un véhicule comportant un élément TARGA.
- La figure 6 ab montre un siège permettant de libérer le passage de la cloison montée sur un type de véhicule coupé convertible avec custodes ou élément TARGA.
- La figure 7 montre en perspective l'arrière d'un véhicule avec custode sur les éléments latéraux de toit , le toit étant rangé
- La figure 8 montre en perspective l'arrière d'un véhicule type TARGA le toit.

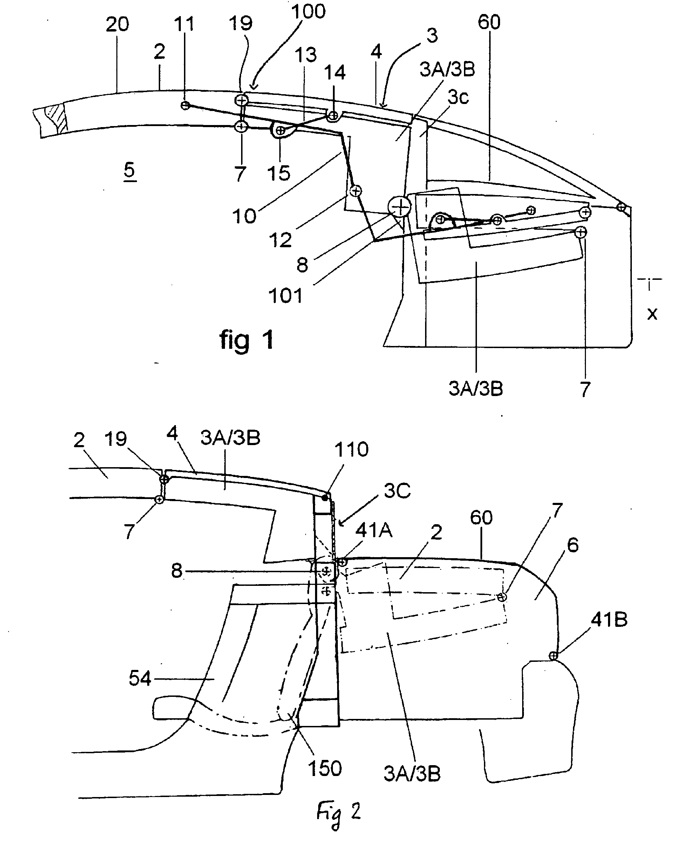

En se reportant aux figures et en particulier aux figures 1 et 2, le toit mobile 100, ici escamotable, du véhicule 1 comprend un élément de toit avant rigide 2 et un élément de toit arrière rigide 3.

L'élément arrière de toit 3 comprend un élément ou panneau central rigide 4 de toit arrière et deux éléments latéraux de toit rigide 3A,3B. Ces éléments latéraux 3A, 3B sont représentés montés indépendants du panneau central 4 de toit arrière mais ils pourraient être solidaires de ce panneau central. Dans l'état fermé du toit, tous les éléments de toit 2,3 sont déployés au dessus de cet habitacle 5, comme sur la fig.1.

Le véhicule comprend un élément transversal arrière fixe sur le châssis ou cloison 3C qui comprend au moins une vitre telle une lunette arrière 30.

Cette cloison 3C se situe derrière les sièges au niveau de la tête des occupants du véhicule. Elle s'étend entre la caisse et l'arrière du toit rigide et notamment de sa partie arrière.

Dans une forme de réalisation, la cloison fait partie de la structure de caisse. Elle se présente sous la forme d'un arceau sur lequel est fixé au moins une vitre arrière telle une lunette.

Cette cloison 3C possède au moins un arceau de sécurité rigidement fixé et/ou intégré à la structure du véhicule.

L'arceau 50 de sécurité est fixé et/ou intégré à une poutre 51 transversale de la structure du véhicule de manière à laisser une ouverture 52 de passage sous la dite poutre.

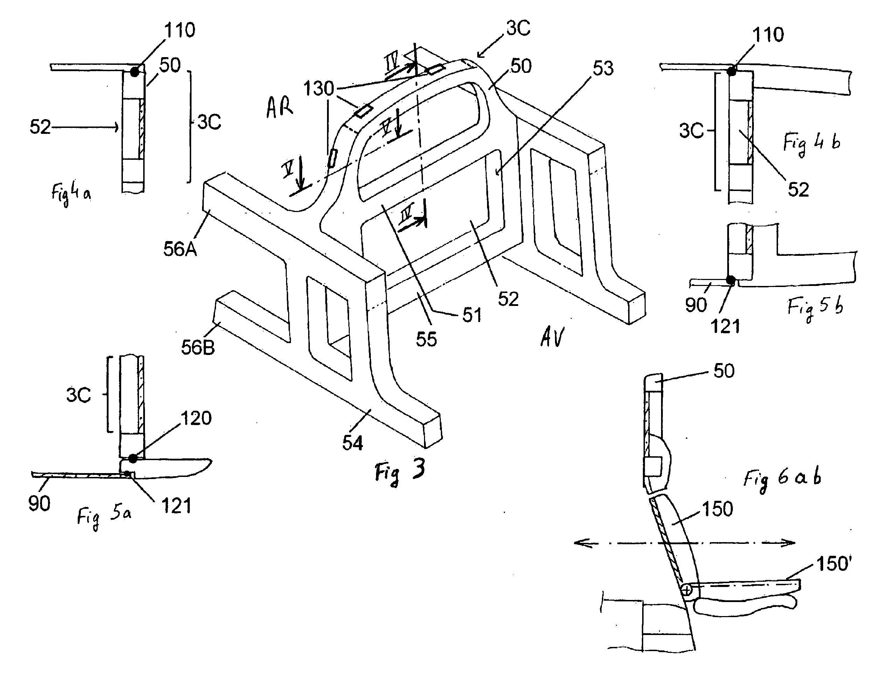

Lorsque le dossier 150 du siège arrière est rabattu 150' (figure 6ab), le coffre est accessible au travers de l'ouverture 52.

La poutre 51 fait partie d'un premier cadre 53 structurel délimitant une ouverture, ce cadre étant structurellement relié aux pieds 54 arrières de la caisse du véhicule.

Comme on peut le voir le pied arrière est courbe.

Ce cadre 53 comporte une poutre basse 55.

La poutre et/ou le cadre précité sont reliés à des deuxièmes cadres 55 latéraux eux même reliés aux pieds 54 arrières de la caisse.

Ces cadres 55 latéraux se prolongent vers l'arrière par des membrures horizontales haute 56 A et basse 56B.

En position déployée du toit, c'est à dire au dessus de l'habitacle, l'arrière du premier et du deuxième élément de toit arrière viennent au voisinage immédiat de la cloison 3C et/ou dudit arceau.

Il est prévu un joint 110, 120 entre l'arrière du premier et du deuxième élément de toit arrière et la cloison et/ou dudit arceau.

En figures 4A et 4B, on voit les joints supérieurs 110 entre la partie arrière du toit et la cloison.

Sur la figure 4B, on voit notamment l'appui de la partie TARGA surmontant le capot du coffre.

Sur la figure 5A, on voit le joint 120 latéral entre l'élément latéral formant custode et la cloison. Est représenté, un joint 121 entre la vitre latérale 90 et la custode.

Sur la figure 5B, on voit également le joint 121 entre la vitre latérale et la cloison.

Il comprend également des dispositifs 130 de butée de sorte que l'ensemble du premier et du deuxième élément de toit arrière repose sur la cloison et soit centré sur la cloison et/ou l'arceau de sécurité.

Ces éléments de toit avant et arrière 2, 3 sont mobiles entre une position dans laquelle ils s'étendent au dessus de l'habitacle 5 du véhicule 1 et une position pliée dans laquelle ces éléments 2, 3 sont ici repliés l'un sur l'autre dans le coffre arrière 6 du véhicule, sous le capot 60 de fermeture de ce coffre.

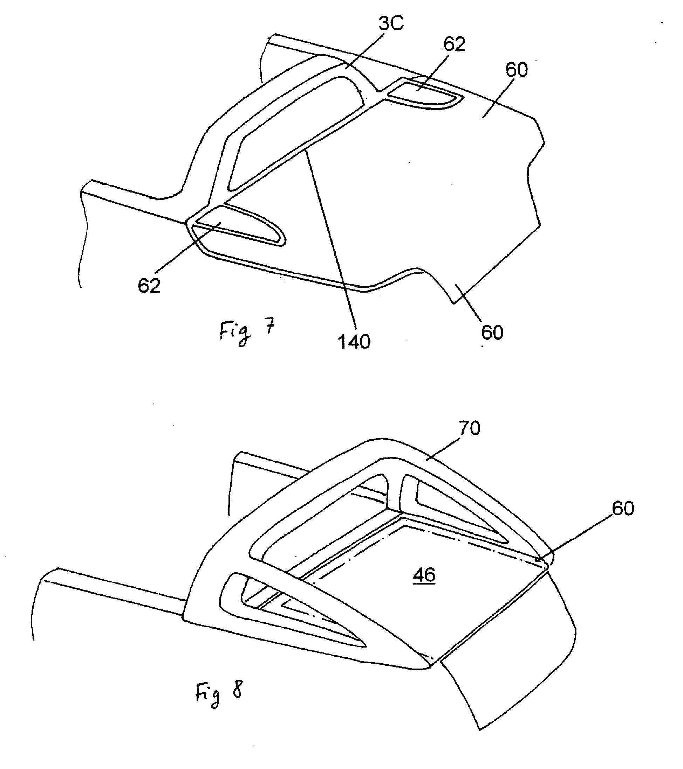

Le capot 60 est accessoirement complété par une partie latérale extérieure comprenant deux volets dits latéraux 62 disposés de part et d'autre de la partie centrale du capot ( figure 7).

Ces volets latéraux 62 forment des clapets masquant des évidements ou des échancrures lorsque le toit est rangé.

Ces clapets 62 permettent le passage des custodes et viennent fermer l'évidemment nécessaire au passage des custodes 3A,3B.

Par custode on comprendra une partie latérale de la carrosserie d'une automobile à l'aplomb de la roue arrière , entre le toit et la ligne de ceinture.

Les clapets 62 sont indépendants de la partie centrale. Ils ont une cinématique apte à libérer le passage ou à le fermer, cette cinématique étant soit différente de la partie dite centrale soit similaire au déplacement de la partie centrale.

Le capot a localement son bord avant qui entoure ou borde les volets 62 latéraux et donc la partie de la custode lorsque celle-ci est en position dépliée du toit.

Ce capot comporte donc des échancrures. Par ailleurs, le bord avant 140 de ce capot est adjacent à la cloison arrière 3C.

Le capot de coffre ( figure 2) est articulé sur la caisse par un jeu d'articulations libérables 41A,41B de sorte à autoriser l'ouverture du capot de l'avant vers l'arrière du véhicule pour ranger le toit et l'ouverture du capot de l'arrière vers l'avant pour accéder aux bagages et les ranger.

Selon un autre mode de réalisation ( figure 1), le capot 60 du coffre 6 est articulé 45 à la caisse de l'avant vers l'arrière de sorte à ne s'ouvrir que de l'avant vers l'arrière pour permettre le rangement du toit à l'état replié dans le coffre.

Un couvercle 46 peut être alors monté sur le coffre articulé de sorte à s'ouvrir de l'arrière vers l'avant.

L'élément avant de toit 2 est articulé à chacun des éléments latéraux arrière de toit 3A 3B suivant deux tronçons d'axes colinéaires repérés 7, compris entre les bords adjacents des éléments 2, 3A, 3B et situés sensiblement dans le prolongement de la surface inférieure de ces éléments latéraux.

Chacun de ces éléments latéraux 3A,3B arrière est par ailleurs articulé à la carrosserie ou plus exactement à la caisse 101 du véhicule suivant un deuxième axe 8 d'articulation.

Le déplacement des deux éléments de toit 2, 3 entre les deux positions précitées est commandé de chaque côté de l'axe longitudinal X par un bras pivotant 10 dont l'extrémité avant est fixée de façon articulée à l'élément avant de toit 2 suivant un troisième axe 11 situé en avant du premier axe 7.

A l'arrière le bras de commande 10 est articulé à la caisse 101 suivant un quatrième axe transversal 12 situé en avant du deuxième axe 8.

Les quatre axes précités 7, 11, 12, 8 définissent un quadrilatère déformable et sont donc transversaux à l'axe longitudinal X.

Le pivotement du bras 10 est commandé par des moyens tels un vérin ou un moteur, permettant à ce bras 10 de basculer vers l'arrière suivant un angle proche de 180°, pour le pliage du toit derrière l'habitacle (voir figure 2).

Comme montré figure 2, en position de rangement dans le coffre arrière 6, l'élément avant de toit 2 s'étend sensiblement horizontalement au-dessus des éléments arrière de toit 3, 4

On remarquera que les éléments latéraux arrière 3A, 3B présentent chacun un profil latéral de forme arquée ou en équerre et épousent pour partie le toit.

Cet élément latéral formant custode ( figure 5A) est articulé à sa base 160 sur la caisse et porte donc le deuxième axe 8 transversal d'articulation du toit qui se situe à distance des deux extrémités avant et arrière de l'élément latéral 3A, 3B.

Entre ces custodes, s'étend la paroi transversale fixe.

Dans une variante la custode présente une base portant donc le deuxième axe 8 transversal d'articulation.

Ces éléments latéraux arrières reçoivent des vitres 90 latérales pouvant être escamotées dans la carrosserie notamment en position découverte

Encore figure 1, le basculement de l'élément central arrière de toit 4 est assuré, de chaque côté de l'axe longitudinal X, par un levier pivotant 13 dont une extrémité est articulée à cet élément 4, suivant un axe transversal 14 situé sous l'élément 4 et dont l'autre extrémité est montée pivotante suivant un autre axe transversal 15 solidaire du bras pivotant 10.

D'autre part, le bord avant de l'élément central arrière 4 est articulé au bord arrière de l'élément avant de toit 2, suivant un axe transversal 19.

Comme montré figure 1 et 2, on remarquera que, lorsque les éléments de toit sont pliés, l'élément de toit avant 2 reste dans la même orientation que lorsqu'il est déployé au-dessus de l'habitacle 5, c'est-à-dire que sa courbure supérieure 20 demeure bombée vers le haut. L'élément de toit 2 demeure par ailleurs dans les deux cas sensiblement à l'horizontal.
Le type de toit utilisé permet de ménager une cloison à l'arrière des occupants du véhicule, cette cloison restant en place quel que soit l'état du toit (déployé ou rangé): en effet, la présence de deux éléments de toits arrière latéraux et l'élément de toit central arrière permet de conserver un évidement entre ces éléments arrière, l'évidement étant occupé par la cloison fixe qui ferme alors l'arrière de l'habitacle en position déployée du toit.
La cloison 3C fixe peut être réalisée sous forme d'un élément de structure du véhicule qui sert alors d'élément de sécurité en cas de choc ou de retournement du véhicule.
La combinaison des éléments de toits latéraux, du deuxième élément de toit arrière et de la cloison permet de réaliser un véhicule à deux rangées de sièges disposant d'un habitacle assez vaste.
Les éléments de toit latéraux arrière peuvent former les custodes: de ce fait, ils offrent une bonne résistance au toit et au véhicule. De plus les custodes portent les articulations du premier élément de toit arrière ce qui confère à l'ensemble du toit une bonne stabilité lors des mouvements de rangement et de déploiement du toit.
Le capot de coffre peut être surmonté d'une partie 70 du type TARGA formant custode et venant coiffer en position fermée du capot ladite cloison, ceci tant en position couverte que découverte du toit. Cette dernière caractéristique permet de bien positionner l'élément TARGA et de bien le maintenir lorsque le véhicule se déplace.
En configuration cabriolet, la cloison permet de protéger les occupants, notamment ceux assis à l'arrière, du véhicule des turbulences d'air.
Il faut noter qu'en position fermée du toit, celui-ci peut reposer et être centré sur la cloison/l'arceau grâce a des dispositifs 130 de butée interposés entre les éléments de toit et la cloison/l'arceau : ceci garanti une bonne stabilité du toit à l'état déployé puisque celui-ci repose sur la cloison fixe qui est solidaire de la structure du véhicule. On remarquera que le centrage se réalise de lui-même vers la fin du mouvement de fermeture du toit grâce au mouvement relatif entre le toit et la cloison fixe.
Un système d'étanchéité à joint est interposé entre les éléments de toit et la cloison/l'arceau : ceci permet de fermer de façon étanche et fiable l'arrière de l'habitacle.
L'invention permet de réaliser de façon simple avec une même structure de base pour la caisse un véhicule de type cabriolet convertible classique (figure 7) ou un véhicule cabriolet de type TARGA (figure 8).

## Revendications

1. Véhicule comportant un toit mobile (100) présentant un avant, un arrière comprenant un élément (2) de toit avant rigide, des éléments (3A,3B) latéraux de toit arrière rigides définissant un premier élément de toit arrière situés de part et d'autre d'un deuxième élément (4) de toit arrière central rigide, ceci au moins dans un état déployé de tous ces éléments de toit, l'élément avant de toit étant articulé au premier élément arrière de toit suivant un premier axe transversal (7) et ce premier élément arrière de toit étant articulé à la caisse (101) du véhicule suivant un deuxième axe transversal (8), lesquels éléments sont mobiles entre ledit état déployé dans lequel ils s'étendent au-dessus de l'habitacle (5) du véhicule et un état plié dans lequel ces éléments de toit sont disposés dans un coffre (6) arrière du véhicule, *ce véhicule étant* ***caractérisé en ce que*** l'espace situé derrière les sièges au niveau de la tête des occupants du véhicule est fermé par une cloison (3C) fixe, solidaire de la caisse du véhicule, la cloison s'étendant entre la caisse du véhicule et des parties arrière du premier et du deuxième élément de toit arrière.

2. Véhicule selon la revendication 1 **caractérisé en ce que** la cloison (3C) fait partie de la structure de la caisse du véhicule.

3. Véhicule selon la revendication 1 au 2 **caractérisé en ce que** la cloison (3C) possède au moins un arceau de sécurité rigidement fixé et/ou intégré à la structure du véhicule.

4. Véhicule selon l'une quelconque des revendications précédentes **caractérisé en ce qu'**en position déployée du toit, les zones situées vers l'arrière du premier et du deuxième élément de toit arrière viennent au voisinage immédiat d'un bord de ladite cloison et/ou dudit au moins un arceau de sécurité.

5. Véhicule selon la revendication 4 **caractérisé en ce qu'**un joint (110,120) d'étanchéité est interposé entre d'une part lesdites parties arrière du premier et du deuxième élément de toit arrière et d'autre part ledit bord de la cloison et/ou dudit au moins un arceau de sécurité de sorte que l'ensemble formé par la cloison, les premier et deuxième éléments de toit ferme l'arrière de l'habitacle.

6. Véhicule selon la revendication 4 ou 5 **caractérisé en ce** des dispositifs (130) de butée sont interposés entre d'une part lesdites parties arrière du premier et du deuxième élément de toit arrière et d'autre part ledit bord de la cloison et/ou dudit au moins un arceau de sécurité de sorte que l'ensemble formé par les premier et deuxième éléments de toit repose et est centré sur la cloison et/ou l'arceau de sécurité.

7. Véhicule selon l'une quelconque des revendications précédentes **caractérisé en ce que** la cloison (3C) ou ledit au moins un arceau porte une ou plusieurs vitres arrières.

8. Véhicule selon la revendication 3 ou suivantes **caractérisé en ce que** l'arceau de sécurité est fixé et/ou intégré à une poutre (51) transversale de la structure du véhicule de manière à laisser une ouverture (52) de passage sous ladite poutre.

9. Véhicule selon la revendication 8 **caractérisé en ce que** la poutre (51) fait partie d'un premier cadre (53) structurel définissant ladite ouverture de passage, ledit premier cadre étant structurellement relié aux pieds (54) arrière de la caisse.

10. Véhicule selon la revendication 8 ou 9 **caractérisé en ce que** la poutre et/ou le cadre sont reliés latéralement aux pieds (54) arrières par des deuxièmes cadres structurels de la caisse.

11. Véhicule selon l'une quelconque des revendications précédentes **caractérisées en ce que** le véhicule présente un coffre (6) arrière qui est fermé par un couvercle de coffre articulé à la caisse du véhicule par un jeu d'articulations (41A, 41B) libérables de sorte à autoriser l'ouverture du capot de l'avant vers l'arrière pour permettre le rangement du toit à l'état replié à l'intérieur du coffre et l'ouverture du capot de l'arrière vers l'avant pour le rangement de bagage dans le coffre.

12. Véhicule selon la revendication 11 **caractérisé en ce que** les éléments latéraux (3A,3B) de toit arrière forment des custodes entre lesquels s'étend ladite cloison.

13. véhicule selon la revendication 12 **caractérisé en ce que** les custodes présentent une base 160 portant ledit deuxième axe transversal d'articulation du premier élément de toit arrière à la caisse.

14. Véhicule selon l'une quelconque des revendications 1 à 10 **caractérisé en ce qu'**il présente un coffre 6 arrière qui est fermé par un capot(60) de coffre articulé à la caisse vers l'arrière du véhicule de sorte à ne s'ouvrir que de l'avant vers l'arrière pour permettre le rangement du toit à l'état replié à l'intérieur du coffre.

15. Véhicule selon la revendication 14 **caractérisé en ce qu'**un couvercle est monté articulé sur le capot de coffre de sorte à s'ouvrir de l'arrière vers l'avant pour accéder à des bagages dans le coffre.

16. Véhicule selon la revendication 14 ou 15 **caractérisé en ce que** le capot de coffre est surmonté d'une partie (70) du type TARGA formant custode et venant coiffer en position fermée du capot ladite cloison, ceci tant en position couverte que découverte du toit.

17. Véhicule selon l'une quelconque des revendications précédentes **caractérisé en ce que** les éléments latéraux du premier élément arrière de toit ont une forme arquée ou en équerre qui reçoit des vitres (90) latérales, celle-ci pouvant être abaissée dans la carrosserie notamment en position découverte du véhicule.

## Claims

1. Vehicle comprising a movable roof (100) having a front and a rear comprising a rigid front roof element (2), rigid lateral rear roof elements (3A, 3B) defining a first rear roof element, situated on either side of a second rigid central rear roof element (4), this at least in a deployed state of all these roof elements, the front roof element being articulated on the first rear roof element on a first transverse axis (7) and this first rear roof element being articulated on the body (101) of the vehicle on a second transverse axis (8), the said elements being able to move between the said deployed state in which they extend above the passenger compartment (5) of the vehicle and a folded state in which these roof elements are disposed in a rear boot (6) of the vehicle, *this vehicle being* ***characterised in* that** the space situated behind the seats level with the head of the occupants of the vehicle is closed by a fixed partition (3C), secured to the body of the vehicle, the partition extending between the body of the vehicle and rear parts of the first and second rear roof elements.

2. Vehicle according to claim 1, **characterised in that** the partition (3C) forms part of the structure of the vehicle body.

3. Vehicle according to claim 1 or 2, **characterised in that** the partition (3C) has at least one roll bar rigidly fixed to and/or integrated in the structure of the vehicle.

4. Vehicle according to any one of the preceding claims,
**characterised in that**, in the deployed position of the roof, the zones situated towards the rear of the first and second rear roof elements come into the immediate vicinity of an edge of the said partition and/or of the said at least one roll bar.

5. Vehicle according to claim 4, **characterised in that** a seal (110, 120) is interposed between on the one hand the said rear parts of the first and second rear roof elements and on the other hand the said edge of the partition and/or of the said at least one roll bar so that the assembly formed by the partition and the first and second roof elements closes the rear of the passenger compartment.

6. Vehicle according to claim 4 or 5, **characterised in that** stop devices (130) are interposed between on the one hand the said rear parts of the first and second rear roof elements and on the other hand the said edge of the partition and/or the said at least one roll bar so that the assembly formed by the first and second roof elements rests and is centred on the partition and/or the roll bar.

7. Vehicle according to any one of the preceding claims, **characterised in that** the partition (3C) or the said at least one roll bar carries one or more rear windows.

8. Vehicle according to claim 3 or the following ones, **characterised in that** the roll bar is fixed to and/or integrated in a transverse beam (51) of the vehicle structure so as to leave a passage opening (52) under the said beam.

9. Vehicle according to claim 8, **characterised in that** the beam (51) forms part of a first structural frame (53) defining the said passage opening, the said first frame being structurally connected to the rear pillars (54) of the body.

10. Vehicle according to claim 8 or 9, **characterised in that** the beam and/or frame are connected laterally to the rear pillars (54) by second structural frames of the body.

11. Vehicle according to any one of the preceding claims, **characterised in that** the vehicle has a rear boot (6) that is closed by a boot lid articulated on the body of the vehicle by a set of articulations (41A, 41B) releasable so as to allow opening of the boot from front to rear in order to enable the roof to be stored in the folded state inside the boot and the boot to be opened from rear to front for storing luggage in the boot.

12. Vehicle according to claim 11, **characterised in that** the lateral rear roof elements (3A, 3B) form rear side panels between which the said partition extends.

13. Vehicle according to claim 12, **characterised in that** the rear side panels have a base (160) carrying the said second transverse axis for articulation of the first rear roof element on the body.

14. Vehicle according to any one of claims 1 to 10, **characterised in that** it has a rear boot (6) that is closed by a boot cover (60) articulated on the body towards the rear of the vehicle so as to open only from front to rear to allow storage of the roof in the folded state inside the boot.

15. Vehicle according to claim 14, **characterised in that** a lid is mounted articulated on the boot cover so as to open from rear to front in order to gain access to luggage in the boot.

16. Vehicle according to claim 14 or 15, **characterised in that** the boot cover is surmounted by a part (70) of the Targa type forming rear side panels and fitting on top of the said partition in the closed position of the cover, both in the covered and uncovered positions of the roof.

17. Vehicle according to any one of the preceding claims, **characterised in that** the lateral elements of the first rear roof element have an arched or square shape that receives side windows (90), this being able to be lowered into the bodywork in particular in the uncovered position of the vehicle.

## Patentansprüche

1. Fahrzeug mit einem ein vorderes und ein hinteres Teil aufweisenden beweglichen Dach (100) mit einem starren vorderen Dachelement (2), starren Dachseitenelementen (3A, 3B), die ein erstes hinteres Dachelement bilden und beidseits eines zweiten starren hinteren Dachmittelelements (4) liegen, zumindest in geschlossenem Zustand all dieser Dachelemente, wobei das vordere Dachelement an dem ersten hinteren Dachelement entlang einer ersten Querachse (7) angelenkt ist und wobei das erste hintere Dachelement an der Karosserie (101) des Fahrzeugs entlang einer zweiten Querachse (8) angelenkt ist, wobei die Elemente zwischen der geschlossenen Stellung, in der sie sich über der Fahrgastzelle (5) des Fahrzeugs erstrecken, und einer offenen Stellung beweglich sind, in der die Dachelemente in einem hinteren Kofferraum (6) des Fahrzeugs angeordnet sind, wobei das Fahrzeug **dadurch gekennzeichnet ist, dass** der hinter den Sitzen in Höhe der Köpfe der Fahrzeuginsassen befindliche Raum durch eine feststehende, mit der Fahrzeugkarosserie fest verbundene Trennwand (3C) geschlossen ist, wobei sich die Trennwand zwischen der Fahrzeugkarosserie und dem hinteren Teil des ersten und des zweiten hinteren Dachelements erstreckt.

2. Fahrzeug nach Anspruch 1, **dadurch gekennzeichnet, dass** die Trennwand (3C) Teil der Struktur der Fahrzeugkarosserie ist.

3. Fahrzeug nach Anspruch 1 oder 2, **dadurch gekennzeichnet, dass** die Trennwand (3C) wenigstens einen Überrollbügel besitzt, der an der Fahrzeugstruktur starr befestigt und/oder in diese integriert ist.

4. Fahrzeug nach einem der vorhergehenden Ansprüche, **dadurch gekennzeichnet, dass** bei geschlossenem Dach die im hinteren Teil des ersten und des zweiten hinteren Dachelements gelegenen Bereiche in unmittelbare Nähe eines Rands der Trennwand und/oder des wenigstens einen Überrollbügels gelangen.

5. Fahrzeug nach Anspruch 4, **dadurch gekennzeichnet, dass** eine Dichtung (110, 120) zwischen dem hinteren Teil des ersten und des zweiten hinteren Dachelements einerseits und dem Rand der Trennwand und/oder des wenigstens einen Überrollbügels andererseits eingefügt ist, so dass die aus der Trennwand und dem ersten und dem zweiten Dachelement bestehende Einheit den hinteren Teil der Fahrgastzelle abschließt.

6. Fahrzeug nach Anspruch 4 oder 5, **dadurch gekennzeichnet, dass** Anschlagsvorrichtungen (130) zwischen den hinteren Teilen des ersten und des zweiten hinteren Dachelements einerseits und dem Rand der Trennwand und/oder des wenigstens einen Überrollbügels andererseits eingefügt sind, so dass die aus dem ersten und dem zweiten Dachelement gebildete Einheit auf der Trennwand und/oder dem Überrollbügel ruht und darauf zentriert ist.

7. Fahrzeug nach einem der vorhergehenden Ansprüche, **dadurch gekennzeichnet, dass** die Trennwand (3C) oder der wenigstens eine Bügel mit einer oder mehreren Heckscheiben versehen ist.

8. Fahrzeug nach Anspruch 3 oder folgende, **dadurch gekennzeichnet, dass** der Überrollbügel an einem Querträger (51) der Fahrzeugstruktur befestigt und/oder darin integriert ist, so dass unter dem Träger eine Durchgangsöffnung (52) verbleibt.

9. Fahrzeug nach Anspruch 8, **dadurch gekennzeichnet, dass** der Träger (51) Teil eines die Durchgangsöffnung bildenden ersten Strukturrahmens (53) ist, wobei der erste Rahmen strukturmäßig mit der C-Säule (54) der Karosserie verbunden ist.

10. Fahrzeug nach Anspruch 8 oder 9, **dadurch gekennzeichnet, dass** der Träger und/oder der Rahmen seitlich mit der C-Säule (54) durch zweite Strukturrahmen der Karosserie verbunden sind.

11. Fahrzeug nach einem der vorhergehenden Ansprüche, **dadurch gekennzeichnet, dass** das Fahrzeug einen hinteren Kofferraum (6) aufweist, der durch einen Kofferraumdeckel geschlossen ist, der durch einen Satz lösbarer Gelenke (41A, 41B) an der Fahrzeugkarosserie gelenkig gelagert ist, so dass das Öffnen der Abdeckung von vorne nach hinten zum Verstauen des Dachs in zusammengefaltetem Zustand innen im Kofferraum und das Öffnen der Abdeckung von hinten nach vorne zum Verstauen von Gepäck im Kofferraum möglich ist.

12. Fahrzeug nach Anspruch 11, **dadurch gekennzeichnet, dass** die Seitenelemente (3A, 3B) des hinteren Dachs hintere Seitenwände bilden, zwischen denen die Trennwand verläuft.

13. Fahrzeug nach Anspruch 12, **dadurch gekennzeichnet, dass** die hinteren Seitenwände eine Basis (160) aufweisen, welche die..zweite Querachse zum Anlenken des ersten hinteren Dachelements an der Karosserie trägt.

14. Fahrzeug nach einem der Ansprüche 1 bis 10, **dadurch gekennzeichnet, dass** es einen hinteren Kofferraum (6) aufweist, der durch eine Kofferraumabdeckung (60) geschlossen ist, die an der Karosserie im hinteren Teil des Fahrzeugs angelenkt ist, so dass sich diese nur von vorne nach hinten öffnet, um das Verstauen des Dachs in zusammengefaltetem Zustand innen im Kofferraum zu ermöglichen.

15. Fahrzeug nach Anspruch 14, **dadurch gekennzeichnet, dass** ein Deckel an der Kofferraumabdeckung gelenkig montiert ist, so dass dieser sich von hinten nach vorne öffnet, um Zugang zum Gepäck im Kofferraum zu erhalten.

16. Fahrzeug nach Anspruch 14 oder 15, **dadurch gekennzeichnet, dass** die Kofferraumabdeckung von einem Teil (70) vom Typ TARGA überragt wird, das die hintere Seitenwand bildet und bei geschlossener Abdeckung die Trennwand überdeckt, und zwar sowohl bei geschlossenem als auch bei geöffnetem Dach.

17. Fahrzeug nach einem der vorhergehenden Ansprüche, **dadurch gekennzeichnet, dass** die Seitenelemente des ersten hinteren Dachelements eine gebogene oder rechtwinklige Form haben, welche die Seitenscheiben (90) aufnimmt, die insbesondere bei offenem Wagen in die Karosserie versenkt werden können.
